(19) Europäisches Patentamt
European Patent Office
Office européen des brevets

(11) **EP 3 254 227 B1**

(12) **EUROPÄISCHE PATENTSCHRIFT**

(45) Veröffentlichungstag und Bekanntmachung des Hinweises auf die Patenterteilung:
**14.08.2019   Patentblatt 2019/33**

(21) Anmeldenummer: **16715257.8**

(22) Anmeldetag: **22.03.2016**

(51) Int Cl.:
*G06F 21/75* (2013.01)      *G06F 12/14* (2006.01)
*G06F 21/60* (2013.01)

(86) Internationale Anmeldenummer:
**PCT/EP2016/056188**

(87) Internationale Veröffentlichungsnummer:
**WO 2016/156095 (06.10.2016 Gazette 2016/40)**

(54) **VERFAHREN ZUM SCHUTZ SICHERHEITSRELEVANTER DATEN IN EINEM CACHESPEICHER**

METHOD FOR PROTECTING SECURITY-RELEVANT DATA IN A CACHE MEMORY

PROCÉDÉ DE PROTECTION DE DONNÉES À SÉCURISER DANS UNE MÉMOIRE CACHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2015   DE 102015205827**

(43) Veröffentlichungstag der Anmeldung:
**13.12.2017   Patentblatt 2017/50**

(73) Patentinhaber: **Siemens Aktiengesellschaft 80333 München (DE)**

(72) Erfinder:
• **ASCHAUER, Hans 81829 München (DE)**
• **HEINTEL, Markus 81377 München (DE)**

(56) Entgegenhaltungen:
**US-A1- 2014 095 797**

• **Zhenghong Wang: "Information leakage due to cache and processor architectures", , 1. Januar 2012 (2012-01-01), XP055248492, ISBN: 978-1-267-78457-5 Gefunden im Internet: URL:http://palms.princeton.edu/system/file s/Dissertation_ZhenghongWang - singlespaced.pdf [gefunden am 2016-02-08]**

**Beschreibung**

In modernen Mikroprozessoren, die in Computersystemen eingesetzt werden, werden zur Beschleunigung des Speicherzugriffs Cachespeicher eingesetzt um Daten aus häufig verwendeten Adressbereichen des Arbeitsspeichers zu Puffern. Diese Beschleunigung des Speicherzugriffs wird dadurch erreicht, dass die Zugriffszeit des Prozessors auf den Cachespeicher deutlich schneller ist als die Zugriffszeit auf Daten aus dem Arbeitsspeicher. Jedoch kann aus der Information welche Teile des Arbeitsspeichers gerade in den Cache geladen sind Informationen über den gerade ausgeführten Prozess gewonnen werden. Dies sind zum Beispiel häufig genutzte Einträge einer Tabelle.

Insbesondere bei kryptographischen Anwendungen stellt dies einen kritischen Seitenkanal dar, der bei geeigneter Auswertung beispielsweise zum Verlust geheimer Schlüssel an einen Angreifer führen kann. Die Angriffe profitieren davon, dass die Zuordnung von Adressen im Arbeitsspeicher auf die Position im Prozessorcache nur eine geringe Variabilität aufweist und somit statistisch ausgewertet werden kann. Allgemein wird versucht, Informationen über die Veränderung des Cacheinhalts durch den zu analysierenden Prozess, beispielsweise eine Kryptoalgorithmus, zu gewinnen.

Eine gängige Strategie ist das Evict-and-Probe Verfahren. Ein Analyseprozess füllt zunächst den Cache mit eigenen Daten und misst anschließend Speicherzugriffszeiten. Hierbei können beispielsweise Cachetreffer (engl. Cache Hits) oder ein Cache-Verfehlen (engl. Cache Miss) gemessen werden. Wird diese Analyse über einen längeren Zeitraum durchgeführt, können Rückschlüsse auf die sicherheitsrelevanten Daten eines Kryptoverfahrens, beispielsweise kryptographische Schlüssel für das AES Verfahren, gezogen werden und es ist einem Angreifer beispielsweise möglich diese sicherheitsrelevanten Daten zu rekonstruieren.

US 2014/0095797 A1 bezieht sich auf einen Cache Speicher zum Steigern von Leistungs- und Sicherheitseigenschaften. Der Cache Speicher umfasst einen Daten-Array zum Speichern einer Vielzahl an Datensätzen, ein Tag-Array zum Speichern eines Satz an Tags. Die Anzahl der Tags entspricht der Anzahl an Datensätzen. Ferner umfasst der Cache Speicher einen Adressdecoder für ein dynamisches Speicher-zu-Cache Mapping zum Steigern der Sicherheit.

Zhenghong Wang: "Information leakage due to cache and processor architectures" beschreibt Permutation von Speicher-zu-Cache Mapping unter Verwendung von Permutationstabellen. Ferner wird ein dynamisches Speicher-zu-Cache "re-mapping" beschrieben.

Die Aufgabe der vorliegenden Erfindung ist es sicherheitsrelevante Daten in einem Cachespeicher zu schützen.

Die Aufgabe wird durch die in den unabhängigen Ansprüchen 1 und 11 beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zum Schutz sicherheitsrelevanter Daten in einem Cachespeicher, wobei eine Kopie der sicherheitsrelevanten Daten von einem allgemeinen Speicher im Cachespeicher abgelegt wird. Gemäß dem Verfahren werden Obfuskationsparameter festgelegt. Es wird eine erste Cachesatzadresse von einer Speicheradresse des allgemeinen Speichers ermittelt, an der die sicherheitsrelevanten Daten abgelegt sind. Es wird eine erste modifizierte Cachesatzadresse für einen ersten Cachesatz mit einer Generierungsfunktion unter Verwendung der Obfuskationsparameter und der ersten Cachesatzadresse erzeugt. Es wird die Kopie der sicherheitsrelevanten Daten unter Verwendung der ersten modifizierten Cachesatzadresse in einer ersten Cachezeile des ersten Cachesatzes gespeichert.

Die Verwendung der modifizierten Cachesatzadresse erschwert die Analyse der Cachedaten, um Informationen über sicherheitsrelevante Daten, wie beispielsweise des verwendeten Kryptoalgorithmus und die kryptographischen Daten des Kryptoalgorithmus, zu erhalten. Dadurch lassen sich die kryptographischen Daten effektiv vor dem Zugriff unbefugter Personen schützen. Durch das erfindungsgemäße Verfahren werden die Daten im Cachespeicher segmentiert und werden im Cachespeicher über mehrere Cachesätze verstreut.

Bei einer ersten Ausführungsform des Verfahrens wird eine Blockadresse aus der Speicheradresse ermittelt, wobei ein erster Bezeichner von der Blockadresse gebildet wird, und wobei die Generierungsfunktion zusätzlich die Blockadresse oder den ersten Bezeichner zur Erzeugung der ersten modifizierten Cachesatzadresse verwendet.

Die zusätzliche Verwendung des ersten Bezeichners oder der Blockadresse bei der Generierung der ersten modifizierten Cachesatzadresse erhöht die Sicherheit des Verfahrens noch weiter.

Bei weiteren Ausführungsformen des Verfahrens erfolgt der Zugriff auf die sicherheitsrelevanten Daten im Cachespeicher mittels des ersten Bezeichners, der ersten Cachesatzadresse und der Generierungsfunktion, wobei die Generierungsfunktion den Obfuskationsparameter, die erste Cachesatzadresse und den ersten Bezeichner verwendet, um die erste modifizierte Cachesatzadresse zu erzeugen.

Um auf die Cachedaten zuzugreifen ist es beispielsweise notwendig, dass beispielsweise eine Zuordnung der ersten modifizierten Cachesatzadresse zur ersten Cachesatzadresse durchführbar ist. Dies kann beispielsweise geschehen, indem beim Speichern der sicherheitsrelevanten Daten eine Tabelle verwendet wird, welche die notwendigen Informationen für diese Zuordnung enthält. Wird eine modifizierte Cachesatzadresse, beispielsweise die erste modifizierte Cachesatzadresse, beim Speichern von sicherheitsrelevanten Daten erzeugt, werden in die Tabelle im Cachespeicher die modifizierte Cachesatzadresse und die (unmodifizierte) Cachesatzadresse gespeichert. Da diese Tabelle einerseits Sicherheitsrisiken bergen kann und zusätzlich Speicherplatz im Cachespeicher belegt, erhöht die direkte Berechnung des modifizierten Cachesatzes beim Zugriff einerseits die Sicherheit und andererseits ist das Verfahren speicherplatzsparend.

Bei weiteren Ausführungsformen des Verfahrens erfolgt ein Ändern der Obfuskationsparameter nach vorgegebenen Regeln, wobei durch das Ändern der Obfuskationsparameter eine Neuorganisation des Cachespeichers durchgeführt wird.

Durch das Ändern der Obfuskationsparameter und das Neuorganisieren des Cachespeichers ist es noch schwieriger für Angreifer den Cachespeicher zu analysieren und es erhöht somit weiter die Sicherheit des Verfahrens.

Bei weiteren Ausführungsformen des Verfahrens werden bei der Neuorganisation die Daten der ersten Cachezeile des ersten Cachesatzes auf eine zweite Cachezeile eines zweiten Cachesatzes abgebildet, wobei weitere Daten weiterer Cachezeilen des ersten Cachesatzes ganz oder teilweise auf andere Cachezeilen weiterer Cachesätze abgebildet werden.

Durch das Abbilden einer Cachezeile des ersten Cachesatzes auf den zweiten Cachesatz und das Abbilden weiterer Cachezeilen des ersten Cachesatzes ganz oder teilweise auf andere Cachezeilen weiterer Cachesätze, wird die Analyse nach einer Neuorganisation des Cachespeichers durch Angreifer oder unbefugte Dritte noch weiter erschwert. Folglich wird damit ein zusätzlicher Schutz der sicherheitsrelevanten Daten erreicht.

Bei weiteren Ausführungsformen des Verfahrens handelt es sich bei der Generierungsfunktion um eine Funktion, welche die erste modifizierte Cachesatzadresse durch eine Permutation der ersten Cachesatzadresse unter Verwendung der Obfuskationsparameter und des ersten Bezeichners erzeugt.

Der Zugriff auf Daten im Cachespeicher soll idealerweise so schnell wie möglich erfolgen. Permutationsoperationen wie beispielsweise eine Exklusiv-Oder Operation, die bitweise auf die erste Cachesatzadresse unter Verwendung der Obfuskationsparameter und des ersten Bezeichners erfolgt, lassen sich auf einfache und hoch effiziente Weise berechnen. Dies hat den Vorteil, dass keine komplexe oder zusätzliche Hardware in den Cachespeicher oder einer Cacheverwaltungseinrichtung integriert werden muss.

Bei weiteren Ausführungsformen des Verfahrens werden die Obfuskationsparameter nach einer vordefinierten Anzahl an erfolgreichen Zugriffen auf den Cachespeicher geändert.

Die Anzahl von erfolgreichen Zugriffen auf den Cachespeicher lässt sich sehr leicht berechnen, wodurch keine komplexe oder zusätzliche Hardware in den Cachespeicher oder einer Cacheverwaltungseinrichtung integriert werden muss.

Bei weiteren Ausführungsformen des Verfahrens werden die Obfuskationsparameter durch eine Unterbrechungsanforderung geändert.

Betriebssysteme, welche in Hochsicherheitssystemen eingesetzt werden, stellen eine Vielzahl von Sicherheitsfunktionen bereit, um einen Zugriff auf sicherheitsrelevante Daten durch Angreifer zu verhindern. Ein solches Betriebssystem kann beim Erkennen eines Angriffs eine Vielzahl von Maßnahmen durchführen, um das Hochsicherheitssystem in einen sicheren Zustand zu bringen. Dazu gehört auch, dass eine Neuorganisation bzw. eine Änderung des Obfuskationsparameters aktiv von Seiten des Betriebssystems mittels einer Unterbrechungsanforderung herbeigeführt werden kann. Das Betriebssystem legt hierbei entweder die neuen Obfuskationsparameter selbst fest oder nutzt eine Generierungseinrichtung für Obfuskationsparameter, um neue Obfuskationsparameter festzulegen.

Bei weiteren Ausführungsformen des Verfahrens wird der Obfuskationsparameter innerhalb eines vorbestimmten Zeitintervalls geändert.

Durch die Änderung des Obfuskationsparameters innerhalb von vorbestimmten Zeitintervallen wird sichergestellt, dass ein Angreifer für die Analyse des Cachespeichers nur wenig Zeit hat. Dadurch ist es für den Angreifer sehr schwer genügend Informationen bei der Analyse zu erhalten, um Informationen über sicherheitsrelevante Daten zu erhalten.

Bei weiteren Ausführungsformen des Verfahrens beinhaltet der Obfuskationsparameter eine Zufallszahl, die vorzugsweise bei einem Systemneustart neu gebildet wird.

Die Verwendung einer Zufallszahl erschwert es Angreifern den Obfuskationsparameter zu erraten. Dadurch wird ein erhöhter Schutz der sicherheitsrelevanten Daten erreicht.

Bei weiteren Ausführungsformen des Verfahrens umfasst der Obfuskationsparameter einen eindeutigen Hardware-Identifizierer.

Die Verwendung eines Hardware-Identifizierers mit weiteren Daten als Obfuskationsparameter erlaubt es einen Obfuskationsparameter zu verwenden, der fest einem Gerät zuordenbar ist. Dies hat den Vorteil, dass Sicherheitssysteme erkennen, wenn ein Gerät ausgetauscht wurde, da ein Teil des Obfuskationsparameters nicht dem bisherigen Hardware-Identifizierers entspricht.

Gemäß einem weiteren Aspekt betrifft die Erfindung ein System zum Schutz sicherheitsrelevanter Daten in einem Cachespeicher, wobei eine Kopie der sicherheitsrelevanten Daten von einem allgemeinen Speicher im Cachespeicher abgelegt wird. Das System weist eine erste Ermittlungseinrichtung, eine Festlegeeinrichtung, eine erste Erzeugungseinrichtung und eine Speichereinrichtung auf. Die Festlegeeinrichtung ist ausgebildet Obfuskationsparametern festzulegen. Die erste Ermittlungseinrichtung ist ausgebildet eine erste Cachesatzadresse von einer Speicheradresse des allgemeinen Speichers, an der die sicherheitsrelevanten Daten abgelegt sind, zu ermitteln. Die erste Erzeugungseinrichtung ist ausgebildet eine erste modifizierte Cachesatzadresse für einen ersten Cachesatz mit einer Generierungseinrichtung unter Verwendung der Obfuskationsparameter und der ersten Cachesatzadresse zu erzeugen. Die Speichereinrichtung ist ausgebildet die Kopie der sicherheitsrelevanten Daten unter Verwendung der ersten modifizierten Cachesatzadresse in einer ersten Cachezeile des ersten Cachesatzes zu speichern.

Die Verwendung der modifizierten Cachesatzadresse erschwert die Analyse der Cachedaten, um Informationen über sicherheitsrelevante Daten, wie beispielsweise des verwendeten Kryptoalgorithmus und die kryptographischen Daten des Kryptoalgorithmus, zu erhalten. Dadurch lassen sich die kryptographischen Daten effektiv vor dem Zugriff unbefugter Personen schützen.

Bei einer ersten Ausführungsform weist das System eine zweite Ermittlungseinrichtung auf, die ausgebildet ist eine Blockadresse aus der Speicheradresse zu ermitteln, wobei ein erster Bezeichner von der Blockadresse gebildet wird, und wobei die Generierungseinrichtung zusätzlich die Blockadresse oder den ersten Bezeichner zur Erzeugung der ersten modifizierten Cachesatzadresse verwendet.

Die zusätzliche Verwendung des ersten Bezeichners oder der Blockadresse bei der Generierung der ersten modifizierten Cachesatzadresse erhöht die Sicherheit des Verfahrens noch weiter.

Bei weiteren Ausführungsformen weist das System eine Zugriffseinrichtung auf, die ausgebildet ist auf die sicherheitsrelevanten Daten im Cachespeicher mittels des ersten Bezeichners, der ersten Cachesatzadresse und der Generierungseinrichtung zuzugreifen, wobei die Generierungseinrichtung den Obfuskationsparameter, die erste Cachesatzadresse und den ersten Bezeichner verwendet, um die erste modifizierte Cachesatzadresse für das Zugreifen im Cachespeicher zu erzeugen.

Um auf die Cachedaten zuzugreifen ist es beispielsweise für die Zugriffseinrichtung notwendig, dass beispielsweise eine Zuordnung der ersten modifizierten Cachesatzadresse zur ersten Cachesatzadresse durchführbar ist. Dies kann beispielsweise geschehen, indem beim Speichern der Daten durch die Speichereinrichtung eine Tabelle verwendet wird, welche die notwendigen Informationen für diese Zuordnung enthält. Wird eine modifizierte Cachesatzadresse, beispielsweise die erste Cachesatzadresse, beim Speichern von Daten erzeugt, werden in die Tabelle im Cachespeicher die modifizierte Cachesatzadresse und die (unmodifizierte) Cachesatzadresse gespeichert. Da diese Tabelle einerseits Sicherheitsrisiken bergen kann und zusätzlich Speicherplatz im Cachespeicher belegt, erhöht die direkte Berechnung des modifizierten Cachesatzes beim Zugriff einerseits die Sicherheit und andererseits ist das Verfahren speicherplatzsparend.

Bei weiteren Ausführungsformen des Systems ist eine Änderungseinrichtung ausgebildet die Obfuskationsparameter nach vorgegebenen Regeln zu ändern, und wobei durch das Ändern der Obfuskationsparameter eine Neuorganisation des Cachespeichers durchgeführt wird.

Durch das Ändern der Obfuskationsparameter durch die Änderungseinrichtung und das Neuorganisieren des Cachespeichers ist es noch schwieriger für Angreifer den Cachespeicher zu analysieren und dies erhöht somit weiter die Sicherheit des Verfahrens.

Bei weiteren Ausführungsformen des Systems handelt es sich bei der Generierungseinrichtung um eine Permutationseinrichtung, welche die erste modifizierte Cachesatzadresse durch eine Permutation der ersten Cachesatzadresse unter Verwendung der Obfuskationsparameter und des ersten Bezeichners erzeugt.

Der Zugriff auf Daten im Cachespeicher soll idealerweise so schnell wie möglich erfolgen. Permutationsoperationen, wie sie die Permutationseinrichtung bereitstellt, sind beispielsweise eine Exklusiv-Oder Operation. Diese können bitweise auf die erste Cachesatzadresse unter Verwendung der Obfuskationsparameter und des ersten Bezeichners angewendet werden und lassen sich auf einfache und hoch effiziente Weise berechnen. Dies hat den Vorteil, dass keine komplexe oder zusätzliche Hardware in den Cachespeicher oder einer Cacheverwaltungseinrichtung integriert werden muss.

Bei weiteren Ausführungsformen des Systems sind die erste Ermittlungseinrichtung und die zweite Ermittlungseinrichtung als eine integrale Ermittlungseinrichtung ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Dabei zeigen:

Fig. 1     eine schematische Darstellung eines konventionellen Systems für eine Speicherung von Daten in einem Cachespeicher;

Fig. 2     ein Ablaufdiagramm des erfindungsgemäßen Verfahrens zum Schutz sicherheitsrelevanter Daten in einem Cachespeicher;

Fig. 3     eine schematische Darstellung eines erfindungsgemäßen Obfuskationsmoduls; und

Fig. 4    eine schematische Darstellung eines erfindungsgemäßen Systems für eine Speicherung von Daten in einem Cachespeicher.

In den Figuren sind funktionsgleiche Elemente mit denselben Bezugszeichen versehen, sofern nichts anderes angegeben ist.

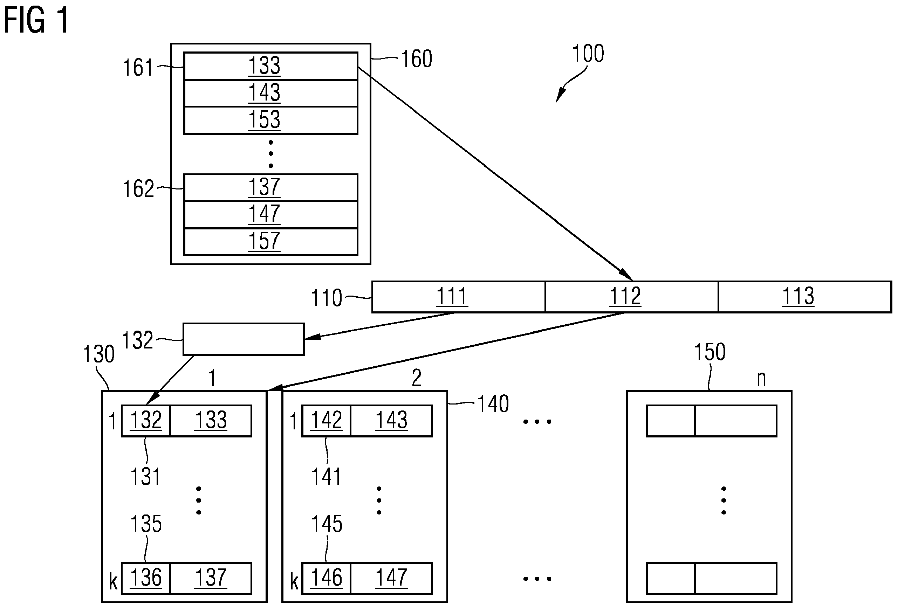

Fig. 1 zeigt eine vereinfachte schematische Darstellung eines konventionellen Systems, das Daten in einem Cachespeicher speichert. Ein Cache oder Cachespeicher ist ein schneller Pufferspeicher, der hilft wiederholte Zugriffe auf einen langsamen Speicher oder eine Neuberechnung von Daten zu vermeiden. Hierzu werden einmal geladene oder erzeugte Daten im Cachespeicher zwischengespeichert, sodass sie bei einem späteren Zugriff schneller abrufbar sind. Zusätzlich ist es möglich Daten, auf die mit hoher Wahrscheinlichkeit bald zugegriffen wird, vorab in den Cachespeicher zu laden.

Fig. 1 zeigt die für heutige Systeme typische Organisation eines Cachespeichers, wobei k die Anzahl der Cachezeilen pro Cachesatz ist (k >= 1). Die Anzahl der Cachesätze n ergibt sich aus n = Cachegröße/(k * Länge einer Cachezeile).

Der prinzipielle Ablauf wie Daten auf konventionelle Weise in den Cachespeicher gespeichert werden, wird im nachfolgenden Abschnitt erläutert. Zusätzlich wird noch darauf eingegangen, dass dieses konventionelle Verfahren problematisch ist hinsichtlich sicherheitsrelevanter Daten.

Zunächst werden die Daten eines Computersystems in Form von Datenblöcken 133, 143, 153, 137, 147, 157 auf einen Speicher, der über Speicheradressen 110 eines Adressraum 160 adressierbar ist, abgebildet. In der Praxis gibt es einen virtuellen und einen physikalischen Adressraum, wobei diese Informationen für die Veranschaulichung des Verfahrens nicht notwendig sind und daher auch nicht näher betrachtet werden.

Mit einer Speicheradresse ist in diesem Beispiel jeweils ein Byte adressierbar. Wird ein Datenblock abgespeichert, so belegt dieser mindestens ein Byte und ist über eine Speicheradresse zugreifbar. Speicheradressen können jeweils unterschiedlichen Adressbereichen zugeordnet werden, um beispielsweise Datenblöcke die mehrere Bytes belegen über einen Adressbereich mit einer Speicheradresse, die Anfangsadresse genannt wird, zu adressieren.

Folglich ist der Adressraum 160 in mehrere Adressbereiche aufgeteilt, in denen beispielsweise ein erster Datenblock 133, ein zweiter Datenblock 143, ein dritter Datenblock 153, ein m1-ter Datenblock 137, ein m2-ter Datenblock 147 und ein m3-ter Datenblock 157 abgelegt sind. In Fig. 1 ist in einem ersten Adressbereich 161 der erste Datenblock 133 und in einem zweiten Adressbereich der m1-ten Datenblock abgelegt.

Der Cachespeicher weist üblicherweise mehrere Cachesätze 130, 140, 150 auf, um eine Kopie eines Datenblocks aus dem Adressraum 160 aufzunehmen. In Fig. 1 ist ein erster Cachesatz 130, ein zweiter Cachesatz 140 und ein n-ter Cachesatz 150 dargestellt. Im Einzelnen weist ein Cachesatz eine Vielzahl von Cachezeilen, Cachezeile 1 bis Cachezeile k, auf, um in einer Cachezeile einen der Datenblöcke 133, 143, 153, 137, 147, 157 zu speichern.

Der abgebildete erste Cachesatz 130 ist an einer ersten Cachesatzadresse 112 im Cachespeicher abgelegt, wobei der erste Cachesatz 130 eine Vielzahl von Cachezeilen aufweist, in denen eine Kopie der Datenblöcke 133 und 137 abgelegt werden sollen. Im Einzelnen sind eine erste Cachezeile 131 und eine k-te Cachezeile 135 für den ersten Cachesatz 130 in Fig. 1 dargestellt, wobei die k-te Cachezeile 135 der letzten Cachezeile im ersten Cachesatz 130 entspricht.

Wird eine Kopie des ersten Datenblockes 133 in den Cachespeicher geladen, wird aus einer Speicheradresse 110 des Datenblocks 133, eine Blockadresse 111 und die erste Cachesatzadresse 112 gebildet. Hierzu werden beispielsweise in einem 64 Bit System Bit 13 bis Bit 64 der Speicheradresse 110 für die Blockadresse 111 gewählt und Bit 7 bis 12 für die erste Cachesatzadresse 112 gewählt. Bits die zur Bildung der Blockadresse 111 und der ersten Cachesatzadresse 112 nicht verwendet wurden, sind irrelevante Bits 113, die für keine weitere Berechnung verwendet werden.

Die Blockadresse 111 wird dann als ein erster Bezeichner 132 verwendet. Falls der Datenblock 133 noch nicht im Cachespeicher liegt, wird eine Cachezeile 132, beispielsweise die am wenigsten häufig genutzte oder mit dem am weitest zurückliegende letzten Zugriff, im Cachesatz 130 ausgewählt und gelöscht. An ihre Stelle tritt der aktuelle Datenblock 133. Der erste Bezeichner 132 wird ebenfalls abgelegt, um später beim Cachezugriff eine eindeutige Zuordnung zu ermöglichen. In Fig. 1 wird zunächst die erste Cachesatzadresse 112 des ersten Cachesatzes 130 bestimmt und dann der erste Datenblock 133 mit dem ersten Bezeichner 132 in der ersten Cachezeile 131 abgelegt.

Auf die gleiche Weise wird der m1-te Datenblock 137 des zweiten Speicherbereichs 162 mittels einer m1-ten Speicheradresse des m1-ten Datenblocks 137 in die k-te Cachezeile 135 des ersten Cachesatzes 130 abgelegt. Hierzu wird wieder eine Blockadresse ermittelt und aus dieser ein m1-ter Bezeichner 136 gebildet. Die erste Cachesatzadresse 112 wird ebenfalls anhand der m1-ten Speicherdadresse ermittelt.

Die Zuordnung welcher Datenblock in welchen Cachesatz abgelegt wird, hängt von der Speicheradresse des Datenblocks ab. Adressbereiche, deren Speicheradresse sich um ein Vielfaches von der Länge eines Datenblockes unterscheiden, werden üblicherweise auf eine Cachezeile im gleichen Cachesatz abgebildet. Damit sind Speicheradressen gemeint, die sich um ein Vielfaches der Anzahl der Bytes pro Cachezeile unterscheiden. Das hat den Effekt, dass die einzelnen Bits der Speicheradresse 110, welche die Cachesatzadresse bestimmen, identisch sind. Bezogen auf das oben beschriebene Beispiel würde dies auf Speicheradressen zutreffen, deren Bits 7-12 identisch sind. In Fig. 1 unterscheiden sich der erste Adressbereich 161 und der zweite Adressbereich 162 somit nur um ein Vielfaches ihrer maximalen Datenblockgröße.

Mittels desselben Verfahrens das oben erläutert wurde, wird der zweite Datenblock 143 mittels seiner zweiten Speicheradresse auf den zweiten Cachesatz 140 abgebildet. Hier wird ebenfalls eine Blockadresse, ein zweiter Bezeichner 142 und eine zweite Cachesatzadresse für den zweiten Cachesatz 140 aus der zweiten Speicheradresse ermittelt.

Da die Bits 7-12 der m2-ten Speicheradresse des m2-ten Datenblockes 147 und der zweiten Speicheradresse identisch sind, wird der m2-te Datenblock 147 auf eine k-te Cachezeile 146 des zweiten Cachesatzes 140 abgebildet und mit einem m2-ten Bezeichner 146, der einer Blockadresse der m2-ten Speicheradresse des m2-ten Datenblocks 147 entspricht, im zweiten Cachesatz 140 gespeichert.

Nach dem gleichen Verfahren werden der dritte Datenblock 153 und der m3-te Datenblock 157 auf Cachezeilen des n-ten Cachesatzes 150 abgebildet.

Diese Organisation des Caches ist jedoch anfällig für Cache Seitenkanalangriffe in Form von Timing Angriffen und birgt somit ein Sicherheitsrisiko für sicherheitsrelevante Daten. Dieses Problem wurde beispielsweise in der Veröffentlichung von Daniel J. Bernstein, "Cache-timing attacks on AES", 2005, ausführlich erläutert. Allgemein wird versucht, Informationen über die Veränderung des Cacheinhalts durch den zu analysierenden Prozess, beispielsweise ein Kryptoalgorithmus, zu gewinnen. Eine gängige Strategie ist das Evict-and-Probe Verfahren. Ein Analyseprozess füllt zunächst den Cache mit eigenen Daten und misst anschließend Cachezugriffszeiten. Hierbei können beispielsweise Cachetreffer (engl. Cache Hits) oder ein Cache-Verfehlen (engl. Cache Miss) gemessen werden. Wird diese Analyse über einen längeren Zeitraum durchgeführt, können Rückschlüsse auf die sicherheitsrelevanten Daten eines Kryptoverfahrens, beispielsweise kryptographische Schlüssel für das AES Verfahren, gezogen werden und im ungünstigsten Fall ist es einem Angreifer möglich diese sicherheitsrelevanten Daten zu rekonstruieren.

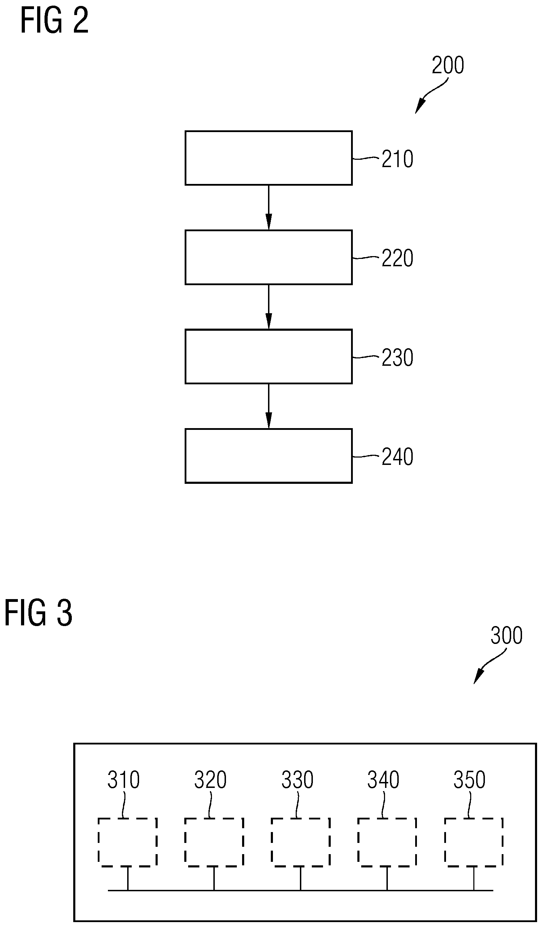

Fig. 2 zeigt ein Ablaufdiagramm des erfindungsgemäßen Verfahrens 200 zum Schutz sicherheitsrelevanter Daten in einem Cachespeicher.

Das Verfahren 200 ist in der Lage, Adressbereiche, deren Speicheradresse sich nur um ein Vielfaches der maximalen Datenblocklänge unterscheiden, nach einer Neuorganisation des Cachespeichers nicht mehr auf eine Cachezeile im selben Cachesatz abzubilden.

Um eine Kopie eines Datenblocks, der sicherheitsrelevante Daten enthält, vor Seitenkanalangriffen zu schützen, wird beim Speichern der Daten im Cachespeicher, falls noch nicht bereits geschehen, ein Obfuskationsparameter in einem Verfahrensschritt 210 festgelegt. Der Obfuskationsparameter ist in diesem Ausführungsbeispiel ein Satz von Zufallszahlen.

Soll der Datenblock, der beispielsweise die sicherheitsrelevante Daten in Form von Schlüsselinformationen für ein kryptographisches Verfahren enthält, im Cachespeicher gepuffert bzw. eine Kopie von den Daten abgelegt werden, wird zunächst in einem Verfahrensschritt 220 eine Cachesatzadresse aus der Speicheradresse des Datenblocks ermittelt.

Um eine Kopie des Datenblocks im Cachespeicher abzulegen wird noch eine Blockadresse aus der Speicheradresse ermittelt und ein erster Bezeichner von der Blockadresse gebildet. Mittels der ersten Cachesatzadresse soll es dem Computersystem ermöglicht werden, die Kopie des Datenblocks im Cachespeicher abzulegen und auf die Kopie des Datenblocks zuzugreifen.

In einem Verfahrensschritt 230 wird mittels einer Generierungsfunktion, dem Obfuskationsparameter und dem ersten Bezeichner aus der ersten Cachesatzadresse eine erste modifizierte Cachesatzadresse erzeugt. In diesem Ausführungsbeispiel ist die Generierungsfunktion eine Exklusiv-Oder Funktion, die bitweise mit dem Obfuskationsparameter und dem ersten Bezeichner auf die erste Cachesatzadresse angewendet wird.

Beispielsweise wird für einen ersten Bezeichner mit einer Länge von 52 Bit dieser mit zwei führenden 0-Bits zu 54 Bit erweitert. Diese 54 Bit werden dann in neun 6-Bit-Wörter w1 bis w9 aufteilt. Zusätzlich wird ein 6-Bit-Obfuskationsparameter o und die unmodifizierte 6-Bit-Cachesatzadresse s, bestehend aus den Bits 7-12 der Speicheradresse, bestimmt. Die modifizierte Cachesatzadresse wird dann mittels der Rechnung

$$A = w1 \oplus w2 \oplus \ldots \oplus w9 \oplus s \oplus o \qquad\qquad \text{Formel 1}$$

erzeugt, wobei "$\oplus$" für XOR bzw. die Exklusiv-Oder Funktion steht und A die modifizierte Cachesatzadresse ist. Hierbei werden die einzelnen 6 Bit-Wörter, der 6-Bit-Obfuskationsparameter und die unmodifizierte 6-Bit-Cachesatzadresse s mittels der Exklusiv-Oder Funktion jeweils bitweise aufeinander angewendet.

Durch die erste modifizierte Cachesatzadresse wird festgelegt, wo ein erster Cachesatz im Cachespeicher liegt. Die Kopie des ersten Datenblocks und der erste Bezeichner werden dann in einem Verfahrensschritt 240 in einer ersten Cachezeile des ersten Cachesatzes gespeichert.

Die Zuordnung der ersten modifizierten Cachesatzadresse zur ersten Cachesatzadresse kann über eine Tabelle erfolgen. In dieser Tabelle wird die erste modifizierte Cachesatzadresse eingetragen, nachdem sie von der Generierungsfunktion erzeugt wurden. Alternativ kann die Tabelle auch vollständig vorher berechnet werden.

Soll nun auf den ersten Datenblock im Cachespeicher zugegriffen werden, wird die erste Cachesatzadresse verwendet, um über die Tabelle die erste modifizierte Cachesatzadresse zu bestimmen. Mittels der ersten modifizierten Cachesatzadresse und dem ersten Bezeichner wird danach auf den Datenblock im Cachespeicher zugegriffen, falls dieser Datenblock bereits im Cachespeicher abgelegt wurde.

Um die Daten vor Seitenkanalangriffen zu schützen, wird der Obfuskationsparameter nach beispielsweise einer festen oder zufällig gewählten Anzahl von 500 Cache-Treffern (engl. Cache Hits) geändert und durch neue Zufallszahlen ersetzt. Durch diese Änderung muss zunächst der Cachespeicher neu organisiert werden, da eine Zuordnung von modifizierten Cachesatzadressen, beispielsweise die erste modifizierte Cachesatzadresse, und zugehörigen Cachesatzadressen, beispielsweise die erste Cachesatzadresse, nicht mehr korrekt ist.

Durch die Änderung des Obfuskationsparameters wird erreicht, dass bei einer Neuorganisation des Cachespeichers die Daten, die bisher als Kopien in der ersten Cachezeile des ersten Cachesatzes gepuffert wurden, bei einem erneuten Speichern einer Kopie auf eine zweite Cachezeile eines zweiten Cachesatzes abgebildet werden. Zusätzlich werden dabei Kopien weiterer Daten die in weiteren Cachezeilen des ersten Cachesatzes gepuffert wurden, jetzt als neue Kopien ganz oder teilweise auf andere Cachezeilen weiterer Cachesätze abgebildet.

Mit anderen Worten wird beispielsweise nach 500 Cache-Treffern die Neuorganisation des Cachespeichers erzwungen. Nach dieser Neuorganisation des Cachespeichers sind die Kopien der Daten bzw. Datensätze im Cachespeicher nicht mehr zugreifbar und es kommt zu einem Cache-Verfehlen. Nun werden mit dem erfindungsgemäßen Verfahren wieder Kopien der Daten, die in Adressbereichen des Adressraums liegen, in den Cachespeicher geschrieben und folglich der Cachespeicher neu aufgebaut.

Der Vorteil ist, dass die Adressbereiche, deren Speicheradresse sich nur um ein Vielfaches der Länge einer Cachezeile unterscheiden, nicht mehr auf eine Cachezeile im selben Cachesatz abgebildet werden.

Dadurch, dass der Cachespeicher immer wieder neuorganisiert wird, ist es nicht mehr möglich durch die Überwachung des Cachespeichers Rückschlüsse auf die sicherheitsrelevanten Daten zu ziehen, die in einem Prozess genutzt werden.

Fig. 3 ist eine schematische Darstellung eines erfindungsgemäßen Obfuskationsmoduls 300. Das Obfuskationsmodul 300 ist eine mögliche Ausführungsform der Patentansprüche, die auf ein System gerichtet sind.

Das Obfuskationsmodul 300 weist eine erste Ermittlungseinrichtung 310, eine zweite Ermittlungseinrichtung 320, eine Festlegeeinrichtung 330, eine erste Erzeugungseinrichtung 340 und eine Speichereinrichtung 350 auf, die über einen Datenbus miteinander verbunden sind.

Soll eine Kopie eines Datenblocks im Cachespeicher gespeichert werden, ermittelt zunächst die erste Ermittlungseinrichtung 330 eine erste Cachesatzadresse von einer Speicheradresse des Datenblocks. Der Datenblock kann hierbei unterschiedlichste Daten enthalten. Dies können beispielsweise Daten sein, die öffentlich zugänglich sind. Es können beispielsweise aber auch personenbezogene Daten, beispielsweise Kundendaten, und sicherheitsrelevante Daten, beispielsweise kryptographische Daten, sein, die nur von zugriffsberechtigten Personen genutzt werden dürfen.

Die zweite Ermittlungseinrichtung 320 wird dazu verwendet, um eine Blockadresse von der Speicheradresse zu ermitteln und aus der Blockadresse einen ersten Bezeichner zu bilden. Es ist aber möglich, dass die Blockadresse direkt als erster Bezeichner verwendet wird.

Falls bisher noch keine Obfuskationsparameter festgelegt wurden, werden mittels der Festlegeeinrichtung 330 Obfuskationsparameter festgelegt. Die Erzeugungseinrichtung 340 erzeugt dann eine erste modifizierte Cachesatzadresse für einen ersten Cachesatz mit einer Generierungseinrichtung unter Verwendung der Obfuskationsparameter, der ersten Cachesatzadresse und des ersten Bezeichners. Die Speichereinrichtung 350 speichert dann die sicherheitsrelevanten Daten zusammen mit dem ersten Bezeichner unter Verwendung der ersten modifizierten Cachesatzadresse in einer ersten Cachezeile des ersten Cachesatzes.

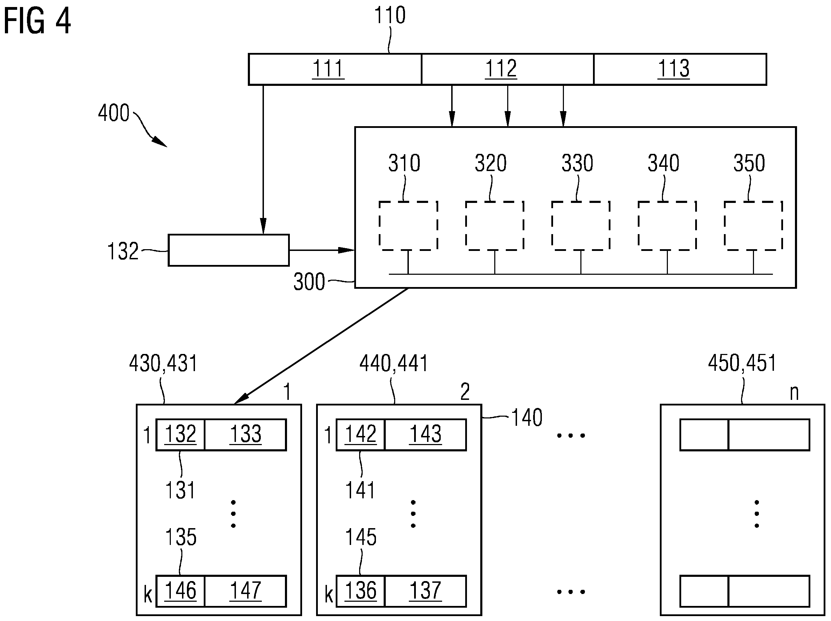

Fig. 4 zeigt eine schematische Darstellung eines erfindungsgemäßen Systems 400 für eine Speicherung von Daten in einem Cachespeicher. Das erfindungsgemäße System 400 verwendet ein erfindungsgemäßes Obfuskationsmodul 300, so wie dies in der Fig. 3 beschrieben wurde.

Das Ausführungsbeispiel zeigt die Organisation eines Cachespeichers, wobei k die Anzahl der Cachezeilen pro Cachesatz ist (k >= 1). Die Anzahl der Cachesätze n ergibt sich aus n = Cachegröße/(k * Länge einer Cacheline).

Zunächst werden die Daten eines Computersystems in Form von Datenblöcken auf einen Speicher, der über Speicheradressen 110 adressierbar ist, abgebildet.

Mit einer Speicheradresse ist in diesem Ausführungsbeispiel jeweils ein Byte adressierbar. Wird ein Datenblock abgespeichert, so belegt dieser mindestens ein Byte und ist über eine Speicheradresse zugreifbar. Speicheradressen können jeweils unterschiedlichen Adressbereichen zugeordnet werden, um beispielsweise Datenblöcke die mehrere Bytes belegen über einen Adressbereich mit einer Speicheradresse, die auch Anfangsadresse genannt wird, zu adressieren.

Folglich ist der Adressraum in mehrere Adressbereiche aufgeteilt, in denen beispielsweise ein erster Datenblock 133, ein zweiter Datenblock 143, ein dritter Datenblock 153, ein m1-ter Datenblock 137, ein m2-ter Datenblock 147 und ein m3-ter Datenblock 157 abgelegt sind.

Der Cachespeicher weist üblicherweise mehrere Cachesätze auf, die eine Kopie eines Datenblocks aus dem Adressraum aufnehmen können. In Fig. 4 ist ein erster Cachesatz 430 mit einer ersten modifizierten Cachesatzadresse 431, ein zweiter Cachesatz 440 mit einer zweiten modifizierten Cachesatzadresse 441 und ein n-ter Cachesatz 450 mit einer n-ten modifizierten Cachesatzadresse 451 dargestellt. Im Einzelnen weist ein Cachesatz eine Vielzahl von Cachezeilen, Cachezeile 1 bis Cachezeile k, auf, um in einer Cachezeile einen der Datenblöcke 133, 143, 153, 137, 147, 157 zu speichern.

Der abgebildete erste Cachesatz 430 ist an der ersten modifizierten Cachesatzadresse 431 im Cachespeicher abgelegt, wobei der erste Cachesatz 430 eine Vielzahl von Cachezeilen aufweist, in denen eine Kopie der Datenblöcke 133 und 147 abgelegt werden sollen. Im Einzelnen sind eine erste Cachezeile 131 und eine k-te Cachezeile 135 für den ersten Cachesatz 430 in Fig. 4 dargestellt, wobei die k-te Cachezeile 135 der letzten Cachezeile im ersten Cachesatz 430 entspricht.

Wird eine Kopie des ersten Datenblockes 133, siehe Fig.1, in den Cachespeicher geladen, wird aus einer Speicheradresse 110 des Datenblocks 133, eine Blockadresse 111 und die erste Cachesatzadresse 112 gebildet. Hierzu werden beispielsweise in einem 64 Bit System Bit 13 bis Bit 64 der Speicheradresse 110 für die Blockadresse 111 gewählt und Bit 7 bis 12 für die erste Cachesatzadresse 112 gewählt. Bits die zur Bildung der Blockadresse 111 und der ersten Cachesatzadresse 112 nicht verwendet wurden, sind irrelevante Bits 113, die für keine weitere Berechnung verwendet werden.

Die Blockadresse 111 wird dann als ein erster Bezeichner 132 verwendet. Die erste modifizierte Cachesatzadresse 431, die dazu verwendet wird den ersten Cachesatz 430 im Cachespeicher zu adressieren und eine Kopie des Datenblocks 133 zu speichern, wird wie folgt bestimmt:

Zunächst wird durch eine Festlegeeinrichtung 330 des Obfuskationsmoduls 300 ein Obfuskationsparameter festgelegt, falls dieser noch nicht festgelegt wurde. Mittels einer ersten Erzeugungseinrichtung 340 des Obfuskationsmoduls 300 wird dann unter Verwendung einer Generierungsfunktion, dem Obfuskationsparameter und dem ersten Bezeichner 132 aus der ersten Cachesatzadresse 112 die erste modifizierte Cachesatzadresse 431 erzeugt.

Falls noch keine Kopie des Datenblocks 133 im Cachespeicher liegt, wird eine Cachezeile 131, beispielsweise die am wenigsten häufig genutzte oder mit dem am weitest zurückliegende letzten Zugriff, im Cachesatz 430 ausgewählt und gelöscht. An ihre Stelle tritt der aktuelle Datenblock 133. Der erste Bezeichner 132 wird ebenfalls abgelegt, um später beim Cachezugriff eine eindeutige Zuordnung zu ermöglichen.

Auf die gleiche Weise wird der m2-te Datenblock 147 mittels einer m2-ten Speicheradresse des m2-ten Datenblocks 147 in die k-te Cachezeile 135 des ersten Cachesatzes 130 abgelegt. Hierzu wird wieder eine Blockadresse ermittelt und aus dieser ein m2-ter Bezeichner 146 gebildet.

Mittels desselben Verfahrens das oben erläutert wurde, wird der zweite Datenblock 143 mittels seiner zweiten Speicheradresse auf den zweiten Cachesatz 440 abgebildet. Hier wird ebenfalls eine Blockadresse, ein zweiter Bezeichner 142 und eine zweite modifizierte Cachesatzadresse für den zweiten Cachesatz 440 aus der zweiten Speicheradresse ermittelt.

Nach dem gleichen Verfahren werden der dritte Datenblock 153 und der m3-te Datenblock 157 auf Cachezeilen des n-ten Cachesatzes 150 abgebildet.

Durch die erste modifizierte Cachesatzadresse 431 wird somit festgelegt, wo der erste Cachesatz 430 im Cachespeicher liegt. Die Zuordnung der ersten modifizierten Cachesatzadresse 431 zur ersten Cachesatzadresse 112 kann über eine Tabelle erfolgen. In dieser Tabelle wird die erste modifizierte Cachesatzadresse 431 eingetragen, nachdem sie von der Generierungsfunktion erzeugt wurden.

Soll nun auf den ersten Datenblock 133 im Cachespeicher zugegriffen werden, wird die erste Cachesatzadresse 112 verwendet, um über die Tabelle die erste modifizierte Cachesatzadresse 431 zu bestimmen. Mittels der ersten modifizierten Cachesatzadresse 431 und dem ersten Bezeichner 132 wird danach auf den Datenblock 133 im Cachespeicher zugegriffen, falls dieser Datenblock 133 bereits im Cachespeicher abgelegt wurde.

Um die Daten vor Seitenkanalangriffen zu schützen, wird der Obfuskationsparameter nach beispielsweise 500 Cache-Treffern (engl. Cache Hits) geändert und durch neue Zufallszahlen ersetzt. Durch diese Änderung muss zunächst der Cachespeicher neu organisiert werden, da eine Zuordnung von modifizierten Cachesatzadressen, beispielsweise die erste modifizierte Cachesatzadresse, und zugehörigen Cachesatzadressen, beispielsweise die erste Cachesatzadresse, nicht mehr korrekt ist.

Durch die Änderung des Obfuskationsparameters wird erreicht, dass bei einer Neuorganisation des Cachespeichers die Daten, die bisher als Kopien in der ersten Cachezeile des ersten Cachesatzes gepuffert wurden, bei einem erneuten Speicher einer Kopie auf eine zweite Cachezeile eines zweiten Cachesatzes abgebildet werden. Zusätzlich werden dabei Kopien weiterer Daten die in weiteren Cachezeilen des ersten Cachesatzes gepuffert wurden, jetzt als

EP 3 254 227 B1

neue Kopien ganz oder teilweise auf andere Cachezeilen weiterer Cachesätze abgebildet.

Mit anderen Worten wird beispielsweise nach 500 Cache-Treffern die Neuorganisation des Cachespeichers erzwungen. Nach dieser Neuorganisation des Cachespeichers sind die Kopien der Daten bzw. Datensätze im Cachespeicher nicht mehr zugreifbar und es kommt zu einem Cache-Verfehlen. Nun werden mit dem erfindungsgemäßen Verfahren wieder Kopien der Daten in den Cachespeicher geschrieben und folglich der Cachespeicher neu aufgebaut.

Der Vorteil ist, dass die Adressbereiche, deren Speicheradresse sich nur um ein Vielfaches der Länge einer Cachezeile unterscheiden, nicht mehr auf eine Cachezeile im selben Cachesatz abgebildet.

Dadurch, dass der Cachespeicher immer wieder neuorganisiert wird, ist es nicht mehr möglich durch die Überwachung des Cachespeichers Rückschlüsse auf die sicherheitsrelevanten Daten zu ziehen, die in einem Prozess genutzt werden.

Bei den genannten Ausführungsbeispielen wird bei den Daten, die im Cachespeicher gepuffert werden, nicht unterschieden, ob es sich hierbei um sicherheitsrelevante Daten handelt oder unkritische Daten. Es wird davon ausgegangen, dass es sich grundsätzlich bei allen Daten um sicherheitsrelevante Daten handelt.

In einer Variante der genannten Ausführungsbeispiele kann für den Zugriff auf einen Datenblock im Cachespeicher die erste modifizierte Cacheadresse bei einem Zugriff mittels der Generierungsfunktion, dem ersten Bezeichner und dem Obfuskationsparameter auch direkt aus der ersten Cachesatzadresse gebildet werden. Hierbei wird auf die Tabelle verzichtet, um beispielsweise Speicherplatz auf einem Prozessor zu sparen.

In einer weiteren Variante der genannten Ausführungsbeispiele werden die Obfuskationsparameter nach einer vordefinierten Anzahl an erfolgreichen Zugriffen auf den Cachespeicher geändert. Dies kann mittels eines einfachen Zählers erfolgen, der über eine Systemschnittstelle von einem Administrator konfigurierbar ist, um unterschiedlichen Sicherheitsanforderungen Rechnung zu tragen. Eine solche Konfiguration wäre aber beispielsweise auch über eine Programmaktualisierung, beispielsweise als Firmwareupdate, durchführbar.

In einer weiteren Variante der genannten Ausführungsbeispiele werden die Obfuskationsparameter durch eine Unterbrechungsanforderung geändert. Ein Betriebssystem kann beim Erkennen eines Angriffs eine Vielzahl von Maßnahmen durchführen, um sich in einen sicheren Zustand zu bringen. Dazu gehört auch, dass eine Neuorganisation bzw. eine Änderung des Obfuskationsparameters aktiv von Seiten des Betriebssystems mittels einer Unterbrechungsanforderung herbeigeführt werden kann.

In einer weiteren Variante der genannten Ausführungsbeispiele werden die Obfuskationsparameter innerhalb eines vorbestimmten Zeitintervalls geändert. Dies kann beispielsweise mittels eines einfachen internen Uhr erfolgen. In einer weiteren Variante ist die Uhr über eine Systemschnittstelle von einem Administrator konfigurierbar ist, um unterschiedlichen Sicherheitsanforderungen Rechnung zu tragen. Eine solche Konfiguration wäre beispielsweise auch über eine Programmaktualisierung, beispielsweise als Firmwareupdate, durchführbar. Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden. Der Schutzumfang der Erfindung ist durch die unabhängigen Ansprüche 1 und 11 bestimmt.

### Patentansprüche

1. Verfahren (200) zum Schutz sicherheitsrelevanter Daten in einem Cachespeicher, wobei eine Kopie der sicherheitsrelevanten Daten von einem allgemeinen Speicher im Cachespeicher abgelegt wird, aufweisend:

   - Festlegen (210) von Obfuskationsparametern;
   - Ermitteln (220) einer ersten Cachesatzadresse (112) von einer Speicheradresse (110) des allgemeinen Speichers an der die sicherheitsrelevanten Daten (133) abgelegt sind;
   - Erzeugen (230) einer ersten modifizierten Cachesatzadresse (431) für einen ersten Cachesatz (430) mit einer Generierungsfunktion unter Verwendung der Obfuskationsparameter und der ersten Cachesatzadresse (112); und
   - Speichern (240) der Kopie der sicherheitsrelevanten Daten (132) unter Verwendung der ersten modifizierten Cachesatzadresse (431) in einer ersten Cachezeile (131) des ersten Cachesatzes (430); und

   wobei die Obfuskationsparameter durch eine Unterbrechungsanforderung geändert werden.

2. Verfahren (200) nach Anspruch 1, wobei eine Blockadresse (111) aus der Speicheradresse (110) ermittelt wird, wobei ein erster Bezeichner (132) von der Blockadresse (111) gebildet wird, und wobei die Generierungsfunktion zusätzlich die Blockadresse (111) oder den ersten Bezeichner (132) zur Erzeugung der ersten modifizierten Cachesatzadresse (431) verwendet.

3. Verfahren (200) nach Anspruch 2, wobei ein Zugreifen auf die sicherheitsrelevanten Daten (133) im Cachespeicher mittels des ersten Bezeichners (132), der ersten Cachesatzadresse (112) und der Generierungsfunktion erfolgt, wobei die Generierungsfunktion den Obfuskationsparameter, die erste Cachesatzadresse und den ersten Bezeichner (132) verwendet, um die erste modifizierte Cachesatzadresse (431) zu erzeugen.

4. Verfahren (200) nach einem der vorhergehenden Ansprüche, wobei ein Ändern der Obfuskationsparameter nach vorgegebenen Regeln erfolgt, und wobei durch das Ändern der Obfuskationsparameter eine Neuorganisation des Cachespeichers durchgeführt wird.

5. Verfahren (200) nach Anspruch 4, wobei bei der Neuorganisation die Daten der ersten Cachezeile (131) des ersten Cachesatzes (430) auf eine zweite Cachezeile (141) eines zweiten Cachesatzes (440) abgebildet werden, und wobei weitere Daten weiterer Cachezeilen des ersten Cachesatzes (430) ganz oder teilweise auf andere Cachezeilen weiterer Cachesätze abgebildet werden.

6. Verfahren (200) nach einem der vorhergehenden Ansprüche, wobei es sich bei der Generierungsfunktion um eine Funktion handelt, welche die erste modifizierte Cachesatzadresse durch eine Permutation der ersten Cachesatzadresse (112) unter Verwendung der Obfuskationsparameter und/oder des ersten Bezeichners (132) erzeugt.

7. Verfahren (200) nach einem der vorhergehenden Ansprüche, wobei die Obfuskationsparameter nach einer vordefinierten Anzahl an erfolgreichen Zugriffen auf den Cachespeicher geändert werden

8. Verfahren (200) nach einem der Ansprüche 1 - 6, wobei die Obfuskationsparameter innerhalb eines vorbestimmten Zeitintervalls geändert werden.

9. Verfahren (200) nach einem der vorhergehenden Ansprüche, wobei die Obfuskationsparameter eine Zufallszahl beinhaltet, die vorzugsweise bei einem Systemneustart neu gebildet werden.

10. Verfahren (200) nach einem der vorhergehenden Ansprüche, wobei die Obfuskationsparameter einen eindeutigen Hardware-Identifizierer umfassen.

11. System (400) zum Schutz sicherheitsrelevanter Daten in einem Cachespeicher, wobei eine Kopie der sicherheitsrelevanten Daten von einem allgemeinen Speicher im Cachespeicher abgelegt wird, aufweisend:

- eine Festlegeeinrichtung (330), die ausgebildet ist Obfuskationsparameter festzulegen;
- eine erste Ermittlungseinrichtung (310), die ausgebildet ist eine erste Cachesatzadresse (112) von einer Speicheradresse (110) des allgemeinen Speichers, an der die sicherheitsrelevanten Daten (133) abgelegt sind, zu ermitteln;
- eine erste Erzeugungseinrichtung (340), die ausgebildet ist eine erste modifizierte Cachesatzadresse (431) für einen ersten Cachesatz (430) mit einer Generierungseinrichtung unter Verwendung der Obfuskationsparameter und der ersten Cachesatzadresse (112) zu erzeugen;
- eine Speichereinrichtung (350), die ausgebildet ist die Kopie der sicherheitsrelevanten Daten (133) unter Verwendung der ersten modifizierten Cachesatzadresse (431) in einer ersten Cachezeile (131) des ersten Cachesatzes (430) zu speichern; und

wobei die Obfuskationsparameter durch eine Unterbrechungsanforderung geändert werden.

12. System (400) nach Anspruch 11, wobei das System eine zweite Ermittlungseinrichtung (320) aufweist, die ausgebildet ist eine Blockadresse (111) aus der Speicheradresse (110) zu ermitteln, wobei ein erster Bezeichner (132) von der Blockadresse (111) gebildet wird, und wobei die Generierungseinrichtung zusätzlich die Blockadresse (111) oder den ersten Bezeichner (132) zur Erzeugung der ersten modifizierten Cachesatzadresse (431) verwendet.

13. System (400) nach Anspruch 12, wobei das System eine Zugriffseinrichtung aufweist, die ausgebildet ist auf die sicherheitsrelevanten Daten (133) im Cachespeicher mittels des ersten Bezeichners (132), der ersten Cachesatzadresse (112) und der Generierungseinrichtung zuzugreifen, wobei die Generierungseinrichtung den Obfuskationsparameter, die erste Cachesatzadresse und den ersten Bezeichner (132) verwendet, um die erste modifizierte Cachesatzadresse (431) für das Zugreifen im Cachespeicher zu erzeugen.

14. System (400) nach einem der vorhergehenden Ansprüche, wobei eine Änderungseinrichtung ausgebildet ist die Obfuskationsparameter nach vorgegebenen Regeln zu ändern, und wobei durch das Ändern der Obfuskationsparameter eine Neuorganisation des Cachespeichers durchgeführt wird.

15. System (400) nach einem der vorhergehenden Ansprüche, wobei es sich bei der Generierungseinrichtung um eine Permutationseinrichtung handelt, welche die erste modifizierte Cachesatzadresse (431) durch eine Permutation der ersten Cachesatzadresse (112) unter Verwendung der Obfuskationsparameter und des ersten Bezeichners (132) erzeugt.

16. System (400) nach einem der vorhergehenden Ansprüche, wobei die erste Ermittlungseinrichtung und die zweite Ermittlungseinrichtung als eine integrale Ermittlungseinrichtung ausgebildet sind.

**Claims**

1. Method (200) for protecting security-relevant data in a cache memory, wherein a copy of the security-relevant data from a general memory is stored in the cache memory, comprising:

   - stipulating (210) obfuscation parameters;
   - determining (220) a first cache set address (112) from a memory address (110) of the general memory at which the security-relevant data (133) are stored;
   - generating (230) a first modified cache set address (431) for a first cache set (430) with a generating function using the obfuscation parameters and the first cache set address (112); and
   - storing (240) the copy of the security-relevant data (132) using the first modified cache set address (431) in a first cache line (131) of the first cache set (430); wherein the obfuscation parameters are modified by an interrupt request.

2. Method (200) according to Claim 1, wherein a block address (111) is determined from the memory address (110), wherein a first identifier (132) is formed from the block address (111) and wherein the generating function additionally uses the block address (111) or the first identifier (132) to generate the first modified cache set address (431).

3. Method (200) according to Claim 2, wherein an access to the security-relevant data (133) in the cache memory is made by means of the first identifier (132), the first cache set address (112) and the generating function, wherein the generating function uses the obfuscation parameter, the first cache set address and the first identifier (132) in order to generate the first modified cache set address (431).

4. Method (200) according to any one of the preceding claims, wherein a modification of the obfuscation parameters is accomplished according to predefined rules and wherein a reorganization of the cache memory is carried out by the modification of the obfuscation parameters.

5. Method (200) according to Claim 4, wherein during the reorganization the data of the first cache line (131) of the first cache set (430) are mapped onto a second cache line (141) of a second cache set (440) and wherein further data of further cache lines of the first cache set (430) are mapped completely or partially onto other cache lines of further cache sets.

6. Method (200) according to any one of the preceding claims, wherein the generating function comprises a function which generates the first modified cache set address by a permutation of the first cache set address (112) using the obfuscation parameters and/or the first identifier (132).

7. Method (200) according to any one of the preceding claims, wherein the obfuscation parameters are modified after a predefined number of successful accesses to the cache memory.

8. Method (200) according to any one of Claims 1-6, wherein the obfuscation parameters are modified within a predetermined time interval.

9. Method (200) according to any one of the preceding claims, wherein the obfuscation parameter contains a random number which is preferably re-formed in the event of a system restart.

10. Method (200) according to any one of the preceding claims, wherein the obfuscation parameters comprise a unique hardware identifier.

11. System (400) for protecting security-relevant data in a cache memory, wherein a copy of the security-relevant data from a general memory is stored in the cache memory, comprising:

    - a stipulating device (330) which is configured to stipulate obfuscation parameters;
    - a first determining device (310) which is configured to determine a first cache set address (112) from a memory address (110) of the general memory at which the security-relevant data (133) are stored;
    - a first generating device (340) which is configured to generate a first modified cache set address (431) for a first cache set (430) with a generating device using the obfuscation parameters and the first cache set address (112);
    - a memory device (350) which is configured to store the copy of the security-relevant data (133) using the first modified cache set address (431) in a first cache line (131) of the first cache set (430); wherein the obfuscation parameters are modified by an interrupt request.

12. System (400) according to Claim 11, wherein the system comprises a second determining device (320) which is configured to determine a block address (111) from the memory address (110),
wherein a first identifier (132) is formed from the block address (111) and wherein the generating device additionally uses the block address (111) or the first identifier (132) to generate the first modified cache set address (431).

13. System (400) according to Claim 12, wherein the system has an access device which is configured to access the security-relevant data (133) in the cache memory by means of the first identifier (132), the first cache set address (112) and the generating device, wherein the generating device uses the obfuscation parameter, the first cache set address, and the first identifier (132) in order to generate the first modified cache set address (431) for accessing in the cache memory.

14. System (400) according to any one of the preceding claims, wherein a modifying device is configured to modify the obfuscation parameters according to predefined rules and wherein a reorganization of the cache memory is performed by the modification of the obfuscation parameters.

15. System (400) according to any one of the preceding claims, wherein the generating device comprises a permutation device which generates the first modified cache set address (431) by a permutation of the first cache set address (112) using the obfuscation parameters and the first identifier (132).

16. System (400) according to any one of the preceding claims, wherein the first determining device and the second determining device are configured as an integral determining device.

**Revendications**

1. Procédé (200) de protection de données à sécuriser dans une mémoire cache, une copie des données à sécuriser étant stockée par une mémoire générale dans la mémoire cache, comprenant :

    - la définition (210) de paramètres d'obfuscation,
    - la détermination (220) d'une première adresse de bloc cache (112) d'une adresse de mémoire (110) de la mémoire générale à laquelle les données à sécuriser (133) sont stockées,
    - la création (230) d'une première adresse de bloc cache modifiée (431) pour un premier bloc cache (430) avec une fonction de génération à l'aide des paramètres d'obfuscation et de la première adresse de bloc cache (112), et,
    - la mémorisation (240) de la copie des données à sécuriser (132) à l'aide de la première adresse de bloc cache modifiée (431) dans une première ligne de cache (131) du premier bloc cache (430), et,

dans lequel les paramètres d'obfuscation sont modifiés par une requête d'interruption.

2. Procédé (200) selon la revendication 1, dans lequel une adresse de bloc (111) est déterminée à partir de l'adresse de mémoire (110), un premier identifiant (132) étant formé de l'adresse de bloc (111), et la fonction de génération utilisant en plus l'adresse de bloc (111) ou le premier identifiant (132) pour créer la première adresse de bloc cache modifiée (431).

3. Procédé (200) selon la revendication 2, dans lequel un accès aux données à sécuriser (133) s'effectue dans la mémoire cache au moyen du premier identifiant (132), de la première adresse de bloc cache (112) et de la fonction de génération, la fonction de génération des paramètres d'obfuscation utilisant la première adresse de bloc cache et le premier identifiant (132), afin de créer la première adresse de bloc cache modifiée (431).

4. Procédé (200) selon l'une des revendications précédentes, dans lequel une modification des paramètres d'obfuscation est effectuée suivant des règles prédéfinies, et dans lequel la modification des paramètres d'obfuscation réorganise la mémoire cache.

5. Procédé (200) selon la revendication 4, dans lequel, lors de la réorganisation, les données de la première ligne de cache (131) du premier bloc cache (430) sont représentées sur une deuxième ligne de cache (440), et d'autres données d'autres lignes de cache du premier bloc cache (430) étant tout ou partie représentées sur d'autres lignes de cache d'autres blocs cache.

6. Procédé (200) selon l'une des revendications précédentes, dans lequel la fonction de génération est une fonction qui crée la première adresse de bloc cache modifiée par une permutation de la première adresse de bloc cache (112) en utilisant les paramètres d'obfuscation et/ou du premier identifiant (132).

7. Procédé (200) selon l'une des revendications précédentes, dans lequel les paramètres d'obfuscation sont modifiés suite à un nombre prédéfini au niveau des accès réussis, sur la mémoire cache.

8. Procédé (200) selon l'une des revendications 1 - 6, dans lequel les paramètres d'obfuscation sont modifiés au sein d'un intervalle de temps prédéfini.

9. Procédé (200) selon l'une des revendications précédentes, dans lequel les paramètres d'obfuscation contiennent un nombre aléatoire, qui est à nouveau formé de préférence lors d'un redémarrage du système.

10. Procédé (200) selon d'une des revendications précédentes, dans lequel les paramètres d'obfuscation comprennent un identifiant hardware univoque.

11. Système (400) de protection de données à sécuriser dans une mémoire cache, une copie des données à sécuriser étant stockée par une mémoire générale dans la mémoire cache, comprenant :

   - un dispositif de définition (330) qui est conçu pour définir des paramètres d'obfuscation,
   - un premier dispositif de détermination (310) qui est conçu pour déterminer une première adresse de bloc cache (112) d'une adresse de mémoire (110) de la mémoire générale à laquelle les données à sécuriser (133) sont stockées,
   - un premier dispositif de création (340) qui est conçu pour créer une première adresse de bloc cache modifiée (431) pour un premier bloc cache (430) avec un dispositif de génération à l'aide des paramètres d'obfuscation et de la première adresse de bloc cache (112),
   - un dispositif de mémorisation (350) qui est conçu pour mémoriser la copie des données à sécuriser (133) à l'aide de la première adresse de bloc cache modifiée (431) dans une première ligne de cache (131) du premier bloc cache (430), et,

   dans lequel les paramètres d'obfuscation sont modifiés par une requête d'interruption.

12. Système (400) selon la revendication 11, dans lequel le système comporte un deuxième dispositif de détermination (320) qui est conçu pour déterminer une adresse de bloc (111) depuis l'adresse de mémoire (110), un premier identifiant (132) étant formé de l'adresse de bloc (111), et le dispositif de génération utilisant en plus l'adresse de bloc (111) ou le premier identifiant (132) pour créer la première adresse de bloc cache modifiée (431).

13. Système (400) selon la revendication 12, dans lequel le système comporte un dispositif d'accès, qui est conçu pour accéder aux données à sécuriser (133) dans la mémoire cache au moyen du premier identifiant (132), de la première adresse de bloc cache (112) et du dispositif de génération, le dispositif de génération des paramètres d'obfuscation utilisant la première adresse de bloc cache et le premier identifiant (132), afin de créer la première adresse de bloc cache modifiée (431) pour l'accès à la mémoire cache.

**14.** Système (400) selon l'une des revendications précédentes, dans lequel un dispositif de modification est conçu pour modifier les paramètres d'obfuscation suivant des règles prédéfinies, et la modification des paramètres d'obfuscation réorganisant la mémoire cache.

**15.** Système (400) selon l'une des revendications précédentes, dans lequel le dispositif de génération est un dispositif de permutation, qui crée la première adresse de bloc cache modifiée (431) par une permutation de la première adresse de bloc cache (112) en utilisant les paramètres d'obfuscation et le premier identifiant (132).

**16.** Système (400) selon l'une des revendications précédentes, dans lequel le premier dispositif de détermination et le deuxième dispositif de détermination sont conçus en tant que dispositif de détermination intégral.

EP 3 254 227 B1

FIG 1

## FIG 2

## FIG 3

# FIG 4

EP 3 254 227 B1

## IN DER BESCHREIBUNG AUFGEFÜHRTE DOKUMENTE

**In der Beschreibung aufgeführte Patentdokumente**

- US 20140095797 A1

**In der Beschreibung aufgeführte Nicht-Patentliteratur**

- **DANIEL J. BERNSTEIN.** *Cache-timing attacks on AES,* 2005